# EUROPEAN PATENT SPECIFICATION

(11) **EP 4 388 683 B1**
(45) Date of publication and mention of the grant of the patent: **20.08.2025**
(21) Application number: 22792946.0
(22) Date of filing: 16.09.2022
(51) Int. Cl.: H04B 10/112, G02B 6/00, G08C 23/04, G08C 23/06, H04B 10/114

(54) **GIMBALLESS QUASI-OMNI OPTICAL COMMUNICATION TRANSCEIVER**
KARDANISCHER OPTISCHER QUASI-OMNI-KOMMUNIKATIONSSENDER/EMPFÄNGER
ÉMETTEUR-RÉCEPTEUR DE COMMUNICATION OPTIQUE QUASI-OMNIDIRECTIONNEL SANS CARDAN

(30) Priority: 17.09.2021 US 202163245714 P
(43) Date of publication of application: 26.06.2024
(73) Proprietor: ViaSat Inc., Carlsbad, CA 92009 (US)
(72) Inventor: HEMMATI, Hamid, Carlsbad, California 92009 (US)
(74) Representative: Swindell & Pearson Limited
(86) International application number: PCT/US2022/043869
(87) International publication number: WO 2023/044049

(56) References cited:
- EP-A2- 0 256 310
- WO-A1-2016/154742
- WO-A2-2015/179961

## Description

### CROSS REFERENCE

The present Application for Patent claims priority from U.S. Provisional Patent Application No. 63/245,714 by Sengupta et al., entitled "GIMBALLESS QUASI-OMNI LASER COMMUNICATION TRANSCEIVER," filed September 17, 2021, assigned to the assignee hereof.

### FIELD OF TECHNOLOGY

The following relates to optical communication transceivers, including gimballess quasi-omni optical communication transceivers.

### BACKGROUND

An optical transceiver may include an optical transmitter and an optical receiver. In some examples, the optical transceiver may be placed on a gimbal to enable coarse-pointing for and/or for actuating the optical transceiver. An omni-directional laser communication system is intended eliminate a usage of precision beam-pointing, which may streamline certain application scenarios. Additionally, as a size or weight of the optical transceiver increases, the ease with which the optical transceiver may be actuated may decrease. Accordingly, techniques that simplify laser beam pointing and/or maintain or reduce a size or weight of the optical transceiver in applications in which the optical transceiver is mobile may be desired.

WO 2016/154742 A1 discloses a wireless optical communication receiver is provided.

EP 0 256 310 A2 discloses a fluorescent activated light detector for detection of time modulated infrared signals of preselected wavelength.

WO 2015/179961 A2 discloses an optical receiver.

### BRIEF DESCRIPTION OF THE DRAWINGS

FIG. 1 illustrates an example of an optical transceiver that supports gimballess quasi-omni optical communication transceivers in accordance with examples as disclosed herein.
FIG. 2 illustrates an example of an optical transceiver that supports gimballess quasi-omni optical communication transceivers in accordance with examples as disclosed herein.
FIG. 3 illustrates an example of an optical communication scheme that supports gimballess quasi-omni optical communication transceivers in accordance with examples as disclosed herein.
FIG. 4 shows a block diagram of an optical transceiver that supports gimballess quasi-omni optical communication transceivers in accordance with examples as disclosed herein.
FIG. 5 shows a flowchart illustrating a method or methods that support gimballess quasi-omni optical communication transceivers in accordance with examples as disclosed herein.

### DETAILED DESCRIPTION

The invention is defined in the independent claims.

An optical transceiver may include an optical transmitter and an optical receiver, where the optical transmitter may be configured to convey information by transmitting light (for example, via lasers) and the optical receiver may be set up to receive information by receiving the transmitted light. In mobile applications, it may be advantageous to simplify laser beam pointing to a target, which may present challenges for optical wireless communications systems, as failure to accurately point laser beams may result in failure to receive the light or failure to retrieve the correct information from the light. Additionally or alternatively, it may be advantageous to decrease a size or a weight of an assembly including the optical transceiver. One method of doing so may involve removing a gimbal (e.g., a coarse-beam-pointing gimbal) from the assembly, which may enhance the compactness and/or may decrease the assembly's weight.

One method of enabling the optical transceiver to compensate for the removal of the gimbal may be for the optical transceiver to include a support structure with multiple optical transmitters and multiple optical receivers pointing in various directions such that there is overlap between transmit beams and/or receive beams of the optical transmitters and/or optical receivers, respectively, in the far-field. In order to support transmissions with narrower beamwidths, each of the optical beam transmit paths may employ larger diameter optics (e.g., reflective or refractive types). Accordingly, as the diameter of the transmit path optics grows, less room on the surface of the support structure may be available for the optics of the optical receivers. This may lead to a smaller aperture diameter optics for each of the optical receivers. Accordingly, the magnitude of the transmit signal as collected by the receiver may decrease.

The methods and apparatuses described herein may enable increased beam collection efficiency while mitigating adverse effects associated with decreasing optical receivers' beam-condensing optics diameters. For instance, the optical transceiver may include a support structure with a surface and a set of optical transmitters perforating the surface of the support structure, where each optical transmitter of the set of optical transmitters is oriented in a different direction relative to each other within the set of optical transmitters. Additionally, the optical transceiver may include an optical receiver (e.g., a single optical receiver), where the optical receiver may include a luminescence wavelength-converting fiber and a detector. The luminescence wavelength-converting fiber may be disposed on the surface of the support structure and may be wrapped at least partially around the support structure. Additionally, at least one end of the luminescence wavelength-converting fiber (e.g., one or both ends of the luminescence wavelength-converting fiber) may be coupled with a detector (e.g., photodetector) with or without a beam concentrator. Wrapping the luminescence wavelength-converting fiber at least partially around the support structure may enable elimination of receive optics apertures (e.g., lenses). Accordingly, if the luminescence wavelength-converting fiber avoids first portions of the support structure associated with components of the optical transmitters and is wrapped around second portions of the support structure where one or more components of the optical transmitters are not present, the optical transceiver may be capable of receiving transmissions over the second portions of the support structure.

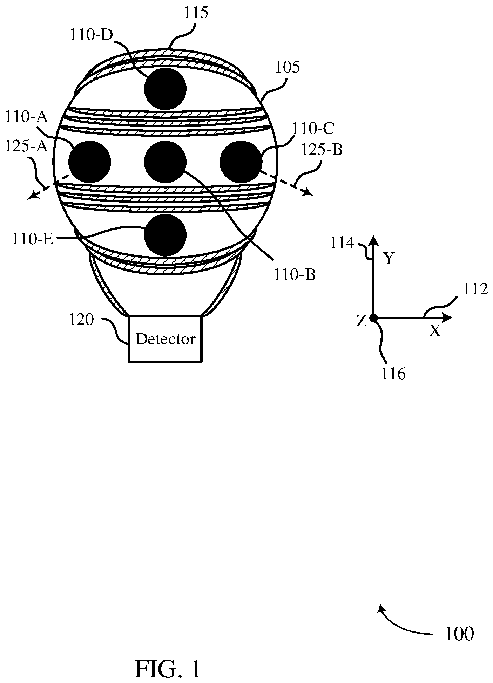

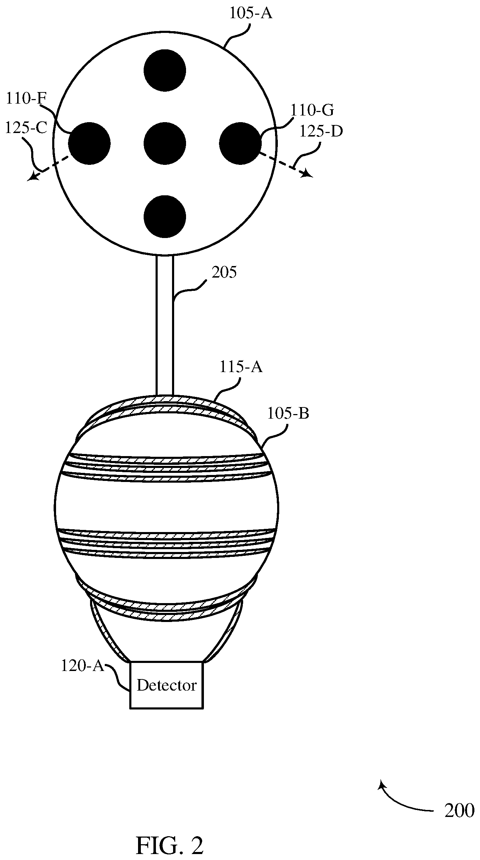

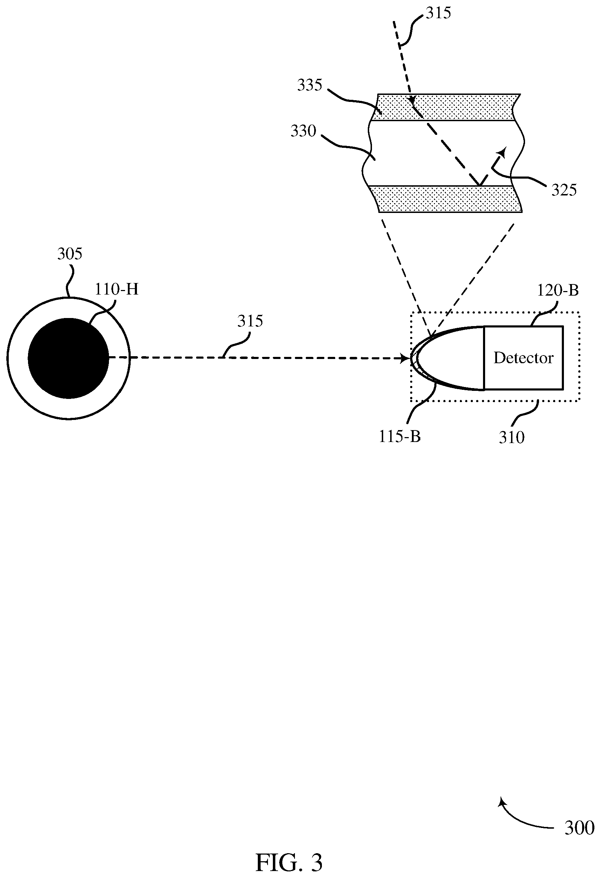

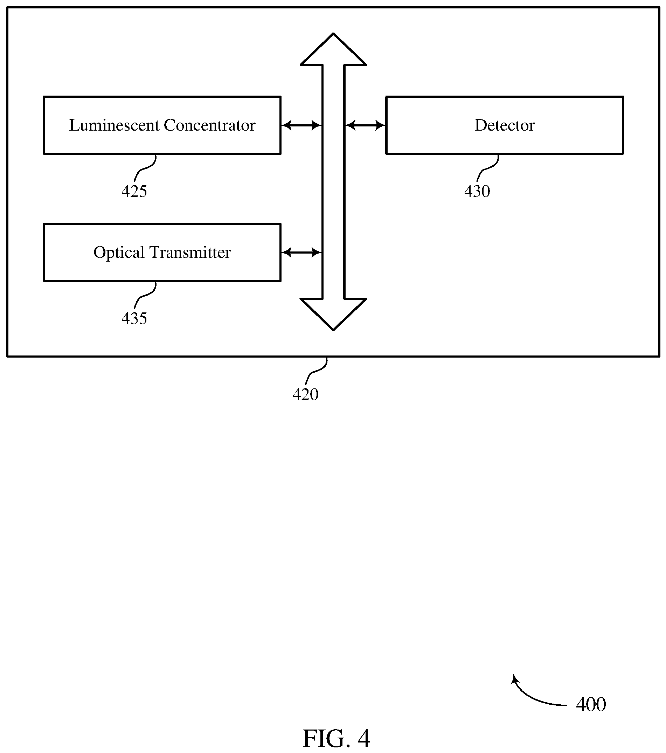

Features of the disclosure are initially described in the context of optical transceivers as described with reference to FIGs. 1 and 2. Features of the disclosure are described in the context of an optical communication system as described with reference to FIG. 3. These and other features of the disclosure are further illustrated by and described with reference to an apparatus diagram and flowcharts that relate to gimballess quasi-omni optical communication transceivers as described with reference to FIGs. 4 through 5.

**FIG. 1** illustrates an example of an optical transceiver 100 that supports gimballess quasi-omni optical communication transceivers in accordance with examples as disclosed herein. An optical transceiver 100 may include optical transmitters (e.g., optical transmitters 110-a, 110-b, 110-c, 110-d, and 110-e) and optical receivers. The optical transmitters may be configured to transmit light at a wavelength and the optical receivers may be configured to receive light at the wavelength or a different wavelength. In some examples, the optical transmitters may transmit the light via one or more lasers and/or optical elements (e.g., lenses).

In some mobile laser communications (lasercom) applications (e.g., mobile underwater laser communications, mobile terrestrial laser communications, mobile aerial laser communications, mobile satellite laser communications), it may be advantageous to simplify laser beam pointing to a target, which may present challenges for optical wireless communications systems, as failure to accurately point laser beams may result in failure to receive the light or failure to retrieve the correct information from the light. Some optical laser assemblies may include a coarse-pointing gimbal. However, the coarse-pointing gimbal may include mechanical components that may experience delays between when the coarse-pointing gimbal points a laser in a first direction as compared to pointing the laser in a second direction and/or that may break down unexpectedly. Additionally, a more compact or more light-weight optical transceiver 100 (e.g., an optical laser transceiver) may be used as compared to stationary laser communications applications. In order to simplify laser beam pointing and/or to enhance compactness or decrease a weight of an optical transceiver assembly, the coarse-pointing gimbal (e.g., a two-axis gimbal) may be removed and the optical transceiver may be set up as an omni optical transmitter or a quasi-omni optical transmitter.

For instance, the optical transceiver 100 may include a support structure 105 with a set (e.g., ensemble) of optical transmitters oriented such that beams of the optical transmitters overlap in the far-field. If the beams of the set of optical transmitters overlap such that there is no gap at least in the far-field, the optical transceiver 100 may be referred to as an omni optical transceiver. Additionally or alternatively, if the beams of the set of optical transmitters overlap such that no gap larger than a threshold amount is present in at least the far-field, the optical transceiver 100 may be referred to as a quasi-omni optical transceiver. Optical transceivers 100 whose lasercom assemblies do not include gimbals may be referred to as gimballess optical transceivers. The optical transceiver 100 may include enough optical transmitters with a spatial arrangement such that transmit beams overlap in the far-field (e.g., such that the optical transceiver 100 is an omni or quasi-omni optical transceiver). A total number of optical transmitters and/or optical receiver may be reduced by scanning a field-of-regard using a two-axis mechanical fine-pointing mirror.

Free-space optical communications may be advantageous for communications systems that use beams with a beamwidth below a threshold amount (e.g., narrow beamwidth communications systems). For instance, to achieve a narrow beamwidth, a wavelength of lasers of the optical transmitters may be reduced and/or associated optics diameters may be increased for a given system (e.g., optical transceiver 100) design. Such wavelengths may be, for instance, between 400 nanometers and 2000 nanometers or greater than 2000 nanometers. In some examples, the transmitter optics diameter may depend on a size of the support structure 105 (e.g., a size of the sphere) and a quantity of optical transmitters (e.g., transmit apertures) used. For instance, the diameter of the optics for each optical transmitter may be just large enough such that overlap (e.g., partial or complete overlap) between transmit beams is still present in the far-field. However, as the optics diameters of the optical transmitters increase, the optics diameters of the optical receivers may decrease by a corresponding amount. Accordingly, the optical transceiver may be less likely to receive transmissions from other devices performing laser communications with the optical transceiver.

One method of mitigating the reduced optics diameters of the optical receivers may be to have a separate support structure for the set of optical receivers. However, having the separate support structure may reduce a compactness or may increase a size, a weight, or an amount of materials used for the lasercom assembly. Accordingly, using the separate structure may decrease the ease with which such optical transceivers are moved between locations.

The present disclosure describes an optical transceiver 100 that may enable increased optics diameters for optical transceivers 100 while mitigating the amount by which optics diameters of optical receivers are decreased. Additionally, the described optical transceiver 100 may have beneficial properties related to a size, weight, or an amount of materials used for the optical transceiver 100 as compared to lasercom assemblies whose optical transceivers include a separate support structure for the optical transceiver. For instance, an optical transceiver 100 may include a support structure 105 with a surface and a set of optical transmitters perforating the surface of the support structure 105, where each optical transmitter of the set of optical transmitters is oriented in a different direction relative to each other optical transmitter of the set of optical transmitters (e.g., optical transmitter 110-a oriented in a first direction 125-a and optical transmitter 110-b oriented in a second direction 125-b different than the first direction). Additionally, the optical transceiver 100 may include an optical receiver, where the optical receiver may include a luminescence wavelength-converting fiber 115 and a detector 120. The luminescence wavelength-converting fiber 115 may be disposed on the surface of the support structure 105, where the luminescence wavelength-converting fiber 115 is wrapped at least partially around the support structure 105 and is located between at least two pairs of the set of optical transmitters (e.g., optical transmitters 110-b and 110-d). Additionally, the luminescence wavelength-converting fiber 115 may be configured to absorb light at a first wavelength and emit light within a channel of the luminescence wavelength-converting fiber 115 at a second wavelength (e.g., a second wavelength different than the first wavelength). The detector 120 may be coupled with the luminescence wavelength-converting fiber 115 at least one end (e.g., one or both ends) of the luminescence wavelength-converting fiber 115, where the detector 120 may be configured to convert the light at the second wavelength to an electrical signal. In some examples, the luminescence wavelength-converting fiber 115 may include or may be a single optical fiber. Additionally or alternatively, the luminescence wavelength-converting fiber 115 may include or be more than one optical fiber (e.g., where each end of each optical fiber is adjoined with at least one end of each other optical fiber such that the detector 120 is coupled with one or two ends, or where the detector 120 is coupled with one or more ends of each optical fiber).

In some examples, the optical transceiver 100 may include a set of lenses or a set of mirrors covering a perforated portion of the surface of the support structure 105. In such examples, each lens of the set of lenses may be associated with a respective optical transmitter of the set of optical transmitters.

In some examples, the luminescence wavelength-converting fiber 115 may be wrapped at least once around the support structure 105. Additionally, or alternatively, the luminescence wavelength-converting fiber 115 may be wrapped multiple times around the support structure 105. In some examples, the luminescence wavelength-converting fiber 115 may be wrapped around the support structure 105 such that at least one quarter of a remaining portion (e.g., the portion not covered by the set of optical transmitters 110) of the surface of the support structure is covered by the luminescence wavelength-converting fiber 115. In some examples, the luminescence wavelength-converting fiber 115 may be wrapped around the support structure 105 such that each optical transmitter and/or lenses associated with each optical transmitter are not covered. Additionally or alternatively, the luminescence wavelength-converting fiber 115 may be wrapped around the support structure 105 such that a portion (e.g., at or above 50%, at or above 75%, at or above 85%, at or above 90%,) of the surface that is not perforated by any optical transmitters and/or covered by lenses covering the optical transmitters is covered by the luminescence wavelength-converting fiber 115.

In some examples, the support structure 105 may be formed in the shape of a sphere, a spheroid (e.g., an ellipsoid), or a polyhedron (e.g., dodecahedron, octahedron, icosahedron, uniform polyhedrons, isohedrons). In other examples, the support structure 105 may be formed in a shape of at least a quarter of a sphere (e.g., a half-sphere), at least a quarter of an ellipsoid (e.g., a half-ellipsoid), or at least quarter of a polyhedron (e.g., a half-polyhedron). In some examples, each optical transmitter may be configured to emit light at the first wavelength.

In some examples, the first wavelength may have a value outside of a visible spectrum of light. Having the value outside the visible spectrum of light may decrease a likelihood that laser communications are detected for secure applications (e.g., applications in which detection of laser communications by an intercepting recipient may have an adverse effect).

In some examples, the optical transceiver 100 may perform laser communications. For instance, the optical transceiver 100 may absorb, at the luminescence wavelength-converting fiber 115 of the optical receiver, light at the first wavelength. The optical transceiver 100 may emit light within the channel of the luminescence wavelength-converting fiber 115 at a second wavelength based on absorbing the light at the first wavelength and may convert, using a detector 120 of the optical receiver, the light at the second wavelength to an electrical signal ,where the detector 120 is coupled with at least one end of the luminescence wavelength-converting fiber 115.

In some examples, the luminescence wavelength-converting fiber 115 be a fiberoptics cable and may operate according to red-shifted luminescence. Additionally or alternatively, the luminescence wavelength-converting fiber 115 may be an optical waveguide (e.g., a glass fiber-optic cable, a glass slab doped with fluorescent dyes, a plasmonic nano-antenna phased-array). In some examples, incident light (e.g., laser light from a communication system) may be absorbed and re-emitted at a different wavelength (e.g., absorbed and re-emitted by dye molecules of the luminescence wavelength-converting fiber 115). The waveguide may collect a portion of the emitted light and may propagate it to the end (e.g., the end coupled with the detector 120) with re-absorption (e.g., due to red-shifted luminescence).

The methods and apparatuses described herein may eliminate receive optics apertures (e.g., lenses), which may allow for an increased transmit optics aperture diameters to be employed on a single support structure 105 as compared to lasercom assemblies that use receive optics apertures. Accordingly, beam collimation and link efficiency may increase (e.g., link margin may improve). Additionally, the optical transceiver 100 may be nondirectional, which may reduce the etendue of the system such that larger active area photodetectors may be used.

Although luminescence wavelength-converting fiber 115 is illustrated as being wrapped around support structure 105 in a single direction (e.g., horizontally in the plane of X direction 112 and Z direction 116) in FIG. 1, luminescence wavelength-converting fiber 115 may be wrapped around support structure 105 in multiple directions (e.g., may be wrapped vertically in the plane of Y direction 114 and Z direction 116 as well as horizontally as shown in the orientation of FIG. 1) to increase coverage of support structure 105 between optical transmitters 110. In some cases, one or more wraps of luminescence wavelength-converting fiber 115 (e.g., in a first direction) may cross other wraps of luminescence wavelength-converting fiber 115 (e.g., in a second direction). Further, luminescence wavelength-converting fiber 115 may be wrapped in more than two directions (e.g., a first direction, a second direction orthogonal to the first direction, a third direction that crosses both the first direction and the second direction), which may allow for additional coverage of support structure 105 between optical transmitters 110.

**FIG.** 2 illustrates an example of an optical transceiver 200 that supports gimballess quasi-omni optical communication transceivers in accordance with examples as disclosed herein. In some examples, one or more aspects of optical transceiver 200 may be an example of one or more aspects of optical transceiver 100 as described herein. For instance, support structures 105-a or 105-b may each be examples of one or more aspects of the support structure 105 as described with reference to FIG. 1; optical transmitter 110-f and 110-g may be examples of one or more aspects of optical transmitters 110 as described with reference to FIG. 1; luminescence wavelength-converting fiber 115-a may be an example of one or more aspects of a luminescence wavelength-converting fiber 115 as described with reference to FIG. 1; detector 120-a may be an example of one or more aspects of a detector 120 as described with reference to FIG. 1; directions 125-c and 125-d may be examples of one or more aspects of directions 125-a or 125-b as described with reference to FIG. 1.

In some examples the luminescence wavelength-converting fiber 115-a and optical transmitters 110-d and 110-e may be on separate assemblies or separate support structures (e.g., optical transceiver 200 may have separate transmitter and receiver configurations). For instance, luminescence wavelength-converting fiber 115-a may be wrapped around support structure 105-b and the set of optical transmitters may perforate the surface of support structure 105-a. The separate support structures may be coupled together (e.g., via a coupling component 205, which may be a rod).

Having the luminescence wavelength-converting fiber 115-a and optical transmitters 110-f and 110-g on separate assemblies may enable multiple links in different directions to be maintained simultaneously. In some examples, the luminescence wavelength-converting fiber 115-a may be wrapped around at least a portion of support structure 105-b (e.g., at or above 25%, at or above 50%, at or above 75%, at or above 85%, at or above 90%) and the optical transmitters 110-f and 110-g may perforate the surface of support structure 105-a. In some examples, support structure 105-b having the luminescence wavelength-converting fiber 115-a may have one or more advantages as compared to the support structure 105-b having receive optics apertures (e.g., lenses). For instance, the luminescence wavelength-converting fiber 115-a may be capable of covering a higher portion of the first support structure than the receive optics apertures. Additionally, in examples in which the luminescence wavelength-converting fiber 115-a consists of a single fiber-optic cable (e.g., as compared to multiple fiber-optic cables with adjoined ends), an electrical signal produced by the detector 120-a may have less noise (e.g., a higher signal-to-noise ratio).

**FIG. 3** illustrates an example of an optical communication scheme 300 that supports gimballess quasi-omni optical communication transceivers in accordance with examples as disclosed herein. In some examples, optical communication scheme 300 may implement one or more aspects of optical transceivers 100 and/or 200. For instance, optical transmitter 110-h may be an example of one or more of optical transmitters 110 as described with reference to FIGs. 1 and/or 2; luminescence wavelength-converting fiber 115-b may be an example of a luminescence wavelength-converting fiber 115 as described with reference to FIGs. 1 and/or 2 and detector 120-b may be an example of a detector 120 as described with reference to FIGs. 1 and/or 2.

In some examples, optical transmitter 110-h may be covered by a lens 305. Additionally, both ends of luminescence wavelength-converting fiber 115-b may be coupled with detector 120-b. In some examples, luminescence wavelength-converting fiber 115-b and detector 120-b may be included within an optical receiver 310. In one example, optical transmitter 110-h may transmit light 315 (e.g., via a laser) corresponding to information to be communicated at a first wavelength. Optical receiver 310 may receive the light 315 using luminescence wavelength-converting fiber 115-b. For instance, luminescence wavelength-converting fiber 115-b may include a layer 335 which may receive the light 315 at the first wavelength and may be doped with fluorescent dye that may absorb the light 315 at the first wavelength and emit light 325 at a second wavelength (e.g., a red-shifted wavelength). Additionally or alternatively, layer 335 may be a plasmonic nano-antenna phased-array. The light 325 emitted by the layer 335 of luminescence wavelength-converting fiber 115-b may propagate within a channel 330 to detector 120-b, where detector 120-b may convert the light to an electrical signal corresponding to the information to be communicated. In some examples, a mirror may be used in conjunction with or in place of the lens 305 for some or each of the set of lenses in order to transmit the light.

**FIG. 4** shows a block diagram 400 of an optical transceiver 420 that supports gimballess quasi-omni optical communication transceivers in accordance with examples as disclosed herein. The optical transceiver 420 may be an example of aspects of an optical transceiver as described with reference to FIGs. 1 through 3. The optical transceiver 420, or various components thereof, may be an example of means for performing various aspects of gimballess quasi-omni optical communication transceivers as described herein. For example, the optical transceiver 420 may include a luminescence wavelength-converting fiber 425, a detector 430, an optical transmitter 435, or any combination thereof. Each of these components may communicate, directly or indirectly, with one another.

The luminescence wavelength-converting fiber 425 may be configured as or otherwise support a means for absorbing, at a luminescence wavelength-converting fiber of an optical receiver, light at a first wavelength, where the luminescence wavelength-converting fiber is disposed on a surface of a support structure such that the luminescence wavelength-converting fiber is wrapped at least partially around the support structure and located between at least two pairs of a set of optical transmitters, where the set of optical transmitters perforates the surface of the support structure, and where each optical transmitter of the set of optical transmitters is oriented in a different direction relative to each other optical transmitter of the set of optical transmitters. In some examples, the luminescence wavelength-converting fiber 425 may be configured as or otherwise support a means for emitting light within a channel of the luminescence wavelength-converting fiber at a second wavelength based at least in part on absorbing the light at the first wavelength. The detector 430 may be configured as or otherwise support a means for converting, using a detector of the optical receiver, the light at the second wavelength to an electrical signal, where the detector is coupled with at least one end of the luminescence wavelength-converting fiber.

In some examples, each optical transmitter of the set of optical transmitters is associated with one or more respective concentrating optical elements (e.g., a lens or a set of lenses). In some examples, the set of optical elements covers a perforated portion of the surface of the support structure.

In some examples, the luminescence wavelength-converting fiber is wrapped multiple times around the support structure.

In some examples, the luminescence wavelength-converting fiber is wrapped around the support structure such that a perforated portion of the surface of the support structure associated with the set of optical transmitters is not covered by the luminescence wavelength-converting fiber and at least one quarter of a remaining portion of the surface of the support structure is covered by the luminescence wavelength-converting fiber.

In some examples, the support structure is formed in a shape of a sphere, a spheroid, or a polyhedron.

In some examples, the support structure is formed in a shape of at least a quarter of a sphere, at least a quarter of an ellipsoid, or at least a quarter of a polyhedron.

In some examples, the detector is coupled with each end of the luminescence wavelength-converting fiber.

In some examples, the luminescence wavelength-converting fiber includes a single optical fiber.

In some examples, the luminescence wavelength-converting fiber includes more than one optical fiber.

In some examples, the optical transmitter 435 may be configured as or otherwise support a means for emitting, from an optical transmitter of the set of optical transmitters, light at the first wavelength.

In some examples, the first wavelength has a value outside of a visible spectrum of light.

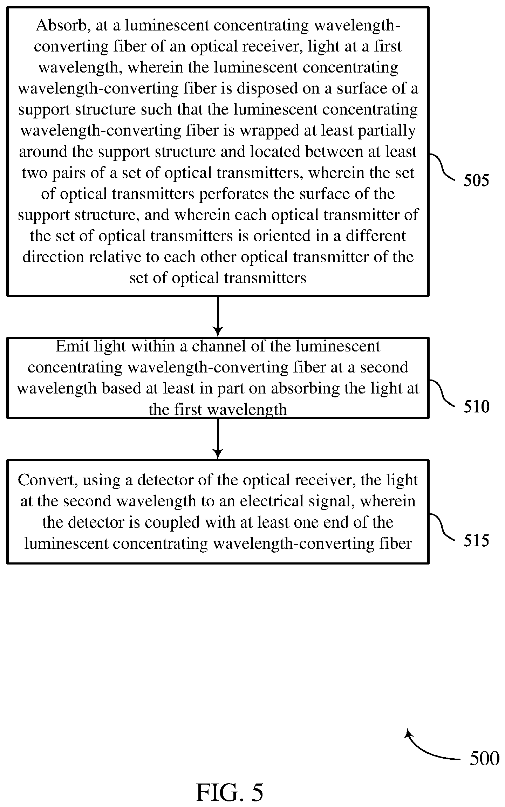

**FIG.** 5 shows a flowchart illustrating a method 500 that supports gimballess quasi-omni optical communication transceivers in accordance with examples as disclosed herein. The operations of method 500 may be implemented by an optical transceiver or its components as described herein. For example, the operations of method 500 may be performed by an optical transceiver as described with reference to FIGs. 1 through 4. In some examples, an optical transceiver may execute a set of instructions to control the functional elements of the device to perform the described functions. Additionally, or alternatively, the optical transceiver may perform aspects of the described functions using special-purpose hardware.

At 505, the method may include absorbing, at a luminescence wavelength-converting fiber of an optical receiver, light at a first wavelength, where the luminescence wavelength-converting fiber is disposed on a surface of a support structure such that the luminescence wavelength-converting fiber is wrapped at least partially around the support structure and located between at least two pairs of a set of optical transmitters, where the set of optical transmitters perforates the surface of the support structure, and where each optical transmitter of the set of optical transmitters is oriented in a different direction relative to each other optical transmitter of the set of optical transmitters. The operations of 505 may be performed in accordance with examples as disclosed herein. In some examples, aspects of the operations of 505 may be performed by a luminescence wavelength-converting fiber 425 as described with reference to FIG. 4.

At 510, the method may include emitting light within a channel of the luminescence wavelength-converting fiber at a second wavelength based at least in part on absorbing the light at the first wavelength. The operations of 510 may be performed in accordance with examples as disclosed herein. In some examples, aspects of the operations of 510 may be performed by a luminescence wavelength-converting fiber 425 as described with reference to FIG. 4.

At 515, the method may include converting, using a detector of the optical receiver, the light at the second wavelength to an electrical signal, where the detector is coupled with at least one end of the luminescence wavelength-converting fiber. The operations of 515 may be performed in accordance with examples as disclosed herein. In some examples, aspects of the operations of 515 may be performed by a detector 430 as described with reference to FIG. 4.

In some examples, an apparatus as described herein may perform a method or methods, such as the method 500. The apparatus may include features, circuitry, logic, means, or instructions (e.g., a non-transitory computer-readable medium storing instructions executable by a processor), or any combination thereof for performing the following aspects of the present disclosure:

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. Some drawings may illustrate signals as a single signal; however, the signal may represent a bus of signals, where the bus may have a variety of bit widths.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details to provide an understanding of the described techniques. These techniques, however, may be practiced without these specific details. In some instances, well-known structures and devices are shown in block diagram form to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

As used herein, including in the claims, "or" as used in a list of items (for example, a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the appended claims. In other words, as used herein, the phrase "based on" shall be construed in the same manner as the phrase "based at least in part on."

The description herein is provided to enable a person skilled in the art to make or use the disclosure. Various modifications to the disclosure will be apparent to those skilled in the art, and the generic principles defined herein may be applied to other variations.

## Claims

1. A system, comprising:
a support structure (105) having a surface;
a set of optical transmitters (110) perforating the surface of the support structure (105), wherein each optical transmitter (110) of the set of optical transmitters (110) is oriented in a different direction (125-a, 125-b) relative to each other optical transmitter (110) of the set of optical transmitters (110); and
an optical receiver (310) comprising:
a luminescence wavelength-converting fiber (115) disposed on the surface of the support structure (105), wherein the luminescence wavelength-converting fiber (115) is wrapped at least partially around the support structure (105) and located between at least two pairs of the set of optical transmitters (110), and wherein the luminescence wavelength-converting fiber (115) is configured to absorb light (315) at a first wavelength and emit light (325) within a channel (330) of the luminescence wavelength-converting fiber (115) at a second wavelength; and
a detector (120) coupled with at least one end of the luminescence wavelength-converting fiber (115), wherein the detector (120) is configured to convert the light (315) at the second wavelength to an electrical signal.

2. The system of claim 1, further comprising:
a set of lenses (305) or a set of mirrors covering a perforated portion of the surface of the support structure (105), wherein each lens (305) of the set of lenses (305) or each mirror of the set of mirrors is associated with a respective optical transmitter (110) of the set of optical transmitters (110).

3. The system of claim 1 or 2, wherein the luminescence wavelength-converting fiber (115) is wrapped multiple times around the support structure (105), wherein, optionally, the luminescence wavelength-converting fiber (115) is wrapped around the support structure (105) such that a perforated portion of the surface of the support structure (105) associated with the set of optical transmitters (110) is not covered by the luminescence wavelength-converting fiber (115) and at least one quarter of a remaining portion of the surface of the support structure (105) is covered by the luminescence wavelength-converting fiber (110).

4. The system of any one of claims 1 through 3, wherein the support structure (105) is formed in a shape of a sphere, a spheroid, or a polyhedron.

5. The system of any one of claims 1 through 3, wherein the support structure (105) is formed in a shape of at least a quarter of a sphere, at least a quarter of an ellipsoid, or at least a quarter of a polyhedron.

6. The system of any one of claims 1 through 5, wherein the detector (120) is coupled with each end of the luminescence wavelength-converting fiber (115).

7. The system of any one of claims 1 through 6, wherein the luminescence wavelength-converting fiber (115) comprises a single optical fiber.

8. The system of any one of claims 1 through 6, wherein the luminescence wavelength-converting fiber (115) comprises more than one optical fiber.

9. The system of any one of claims 1 through 8, wherein each optical transmitter (110-a) is configured to emit light (315) at the first wavelength.

10. The system of any one of claims 1 through 9, wherein the first wavelength has a value outside of a visible spectrum of light.

11. A method, comprising:
absorbing, at a luminescence wavelength-converting fiber (115) of an optical receiver (310), light (315) at a first wavelength, wherein the luminescence wavelength-converting fiber (115) is disposed on a surface of a support structure (105) such that the luminescence wavelength-converting fiber (115) is wrapped at least partially around the support structure (105) and located between at least two pairs of a set of optical transmitters (110), wherein the set of optical transmitters (110) perforates the surface of the support structure (105), and wherein each optical transmitter (110) of the set of optical transmitters (110) is oriented in a different direction relative to each other optical transmitter (110) of the set of optical transmitters (110);
emitting light (315) within a channel of the luminescence wavelength-converting fiber (115) at a second wavelength based at least in part on absorbing the light (315) at the first wavelength; and
converting, using a detector of the optical receiver (310), the light (315) at the second wavelength to an electrical signal, wherein the detector is coupled with at least one end of the luminescence wavelength-converting fiber (115).

12. The method of claim 11, wherein
each optical transmitter (110) of the set of optical transmitters (110) is associated with a respective lens (305) of a set of lenses (305) or a respective mirror of a set of mirrors, and
the set of lenses (305) or the set of mirrors covers a perforated portion of the surface of the support structure (105).

13. The method of any of one of claims 11 or 12, wherein the luminescence wavelength-converting fiber (115) is wrapped multiple times around the support structure (105).

14. The method of claim 13, wherein the luminescence wavelength-converting fiber (115) is wrapped around the support structure (105) such that a perforated portion of the surface of the support structure (105) associated with the set of optical transmitters (110) is not covered by the luminescence wavelength-converting fiber (115) and at least one quarter of a remaining portion of the surface of the support structure (105) is covered by the luminescence wavelength-converting fiber (115).

15. The method of any one of claims 11 through 14, wherein the detector is coupled with each end of the luminescence wavelength-converting fiber (115).

## Patentansprüche

1. System, umfassend:
eine Stützstruktur (105) mit einer Oberfläche;
einen Satz optischer Sender (110), der die Oberfläche der Stützstruktur (105) perforiert, wobei jeder optische Sender (110) des Satzes optischer Sender (110) in eine andere Richtung (125-a, 125-b) relativ zu jedem anderen optischen Sender (110) des Satzes optischer Sender (110) ausgerichtet ist; und
einen optischen Empfänger (310), der Folgendes umfasst:
eine Lumineszenzwellenlängenumwandlungsfaser (115), die auf der Oberfläche der Stützstruktur (105) angeordnet ist, wobei die Lumineszenzwellenlängenumwandlungsfaser (115) mindestens teilweise um die Stützstruktur (105) gewickelt ist und sich zwischen mindestens zwei Paaren des Satzes optischer Sender (110) befindet und wobei die Lumineszenzwellenlängenumwandlungsfaser (115) dazu konfiguriert ist, Licht (315) mit einer ersten Wellenlänge zu absorbieren und Licht (325) innerhalb eines Kanals (330) der Lumineszenzwellenlängenumwandlungsfaser (115) mit einer zweiten Wellenlänge zu emittieren; und
einen Detektor (120), der mit mindestens einem Ende der Lumineszenzwellenlängenumwandlungsfaser (115) gekoppelt ist, wobei der Detektor (120) dazu konfiguriert ist, das Licht (315) mit der zweiten Wellenlänge in ein elektrisches Signal umzuwandeln.

2. System nach Anspruch 1, ferner umfassend:
einen Satz Linsen (305) oder einen Satz Spiegel, der einen perforierten Abschnitt der Oberfläche der Stützstruktur (105) bedeckt, wobei jede Linse (305) des Satzes Linsen (305) oder jeder Spiegel des Satzes Spiegel einem jeweiligen optischen Sender (110) des Satzes optischer Sender (110) zugeordnet ist.

3. System nach Anspruch 1 oder 2, wobei die Lumineszenzwellenlängenumwandlungsfaser (115) mehrfach um die Stützstruktur (105) gewickelt ist, wobei die Lumineszenzwellenlängenumwandlungsfaser (115) optional so um die Stützstruktur (105) gewickelt ist, dass ein perforierter Abschnitt der Oberfläche der Stützstruktur (105), der dem Satz optischer Sender (110) zugeordnet ist, nicht durch die Lumineszenzwellenlängenumwandlungsfaser (115) bedeckt ist und mindestens ein Viertel eines verbleibenden Abschnitts der Oberfläche der Stützstruktur (105) durch die Lumineszenzwellenlängenumwandlungsfaser (110) bedeckt ist.

4. System nach einem der Ansprüche 1 bis 3, wobei die Stützstruktur (105) in einer Form einer Kugel, eines Sphäroids oder eines Polyeders ausgebildet ist.

5. System nach einem der Ansprüche 1 bis 3, wobei die Stützstruktur (105) in einer Form von mindestens einem Viertel einer Kugel, mindestens einem Viertel eines Ellipsoids oder mindestens einem Viertel eines Polyeders ausgebildet ist.

6. System nach einem der Ansprüche 1 bis 5, wobei der Detektor (120) mit jedem Ende der Lumineszenzwellenlängenumwandlungsfaser (115) gekoppelt ist.

7. System nach einem der Ansprüche 1 bis 6, wobei die Lumineszenzwellenlängenumwandlungsfaser (115) eine einzelne optische Faser umfasst.

8. System nach einem der Ansprüche 1 bis 6, wobei die Lumineszenzwellenlängenumwandlungsfaser (115) mehr als eine optische Faser umfasst.

9. System nach einem der Ansprüche 1 bis 8, wobei jeder optische Sender (110-a) dazu konfiguriert ist, Licht (315) mit der ersten Wellenlänge zu emittieren.

10. System nach einem der Ansprüche 1 bis 9, wobei die erste Wellenlänge einen Wert außerhalb eines sichtbaren Lichtspektrums aufweist.

11. Verfahren, umfassend:
Absorbieren, an einer Lumineszenzwellenlängenumwandlungsfaser (115) eines optischen Empfängers (310), von Licht (315) mit einer ersten Wellenlänge, wobei die Lumineszenzwellenlängenumwandlungsfaser (115) auf einer Oberfläche einer Stützstruktur (105) angeordnet ist, so dass die Lumineszenzwellenlängenumwandlungsfaser (115) mindestens teilweise um die Stützstruktur (105) gewickelt ist und sich zwischen mindestens zwei Paaren eines Satzes optischer Sender (110) befindet, wobei der Satz optischer Sender (110) die Oberfläche der Stützstruktur (105) perforiert und wobei jeder optische Sender (110) des Satzes optischer Sender (110) in eine andere Richtung relativ zu jedem anderen optischen Sender (110) des Satzes optischer Sender (110) ausgerichtet ist;
Emittieren von Licht (315) innerhalb eines Kanals der Lumineszenzwellenlängenumwandlungsfaser (115) mit einer zweiten Wellenlänge, basierend mindestens teilweise auf dem Absorbieren des Lichts (315) mit der ersten Wellenlänge; und
Umwandeln des Lichts (315) mit der zweiten Wellenlänge in ein elektrisches Signal unter Verwendung eines Detektors des optischen Empfängers (310), wobei der Detektor mit mindestens einem Ende der Lumineszenzwellenlängenumwandlungsfaser (115) gekoppelt ist.

12. Verfahren nach Anspruch 11, wobei
jeder optische Sender (110) des Satzes optischer Sender (110) einer jeweiligen Linse (305) eines Satzes Linsen (305) oder einem jeweiligen Spiegel eines Satzes Spiegel zugeordnet ist und
der Satz Linsen (305) oder der Satz Spiegel einen perforierten Abschnitt der Oberfläche der Stützstruktur (105) bedeckt.

13. Verfahren nach einem der Ansprüche 11 oder 12, wobei die Lumineszenzwellenlängenumwandlungsfaser (115) mehrfach um die Stützstruktur (105) gewickelt ist.

14. Verfahren nach Anspruch 13, wobei die Lumineszenzwellenlängenumwandlungsfaser (115) so um die Stützstruktur (105) gewickelt ist, dass ein perforierter Abschnitt der Oberfläche der Stützstruktur (105), der dem Satz optischer Sender (110) zugeordnet ist, nicht durch die Lumineszenzwellenlängenumwandlungsfaser (115) bedeckt ist und mindestens ein Viertel eines verbleibenden Abschnitts der Oberfläche der Stützstruktur (105) durch die Lumineszenzwellenlängenumwandlungsfaser (115) bedeckt ist.

15. Verfahren nach einem der Ansprüche 11 bis 14, wobei der Detektor mit jedem Ende der Lumineszenzwellenlängenumwandlungsfaser (115) gekoppelt ist.

## Revendications

1. Système, comprenant :
une structure de support (105) possédant une surface ;
un ensemble d'émetteurs optiques (110) perforant la surface de la structure de support (105), dans lequel chaque émetteur optique (110) de l'ensemble d'émetteurs optiques (110) est orienté dans une direction différente (125-a, 125-b) par rapport à chaque autre émetteur optique (110) de l'ensemble d'émetteurs optiques (110) ; et
un récepteur optique (310) comprenant :
une fibre de conversion de longueur d'onde de luminescence (115) disposée sur la surface de la structure de support (105), dans lequel la fibre de conversion de longueur d'onde de luminescence (115) est enroulée au moins partiellement autour de la structure de support (105) et située entre au moins deux paires de l'ensemble d'émetteurs optiques (110), et dans lequel la fibre de conversion de longueur d'onde de luminescence (115) est configurée pour absorber la lumière (315) à une première longueur d'onde et émettre la lumière (325) à l'intérieur d'un canal (330) de la fibre de conversion de longueur d'onde de luminescence (115) à une seconde longueur d'onde ; et
un détecteur (120) couplé à au moins une extrémité de la fibre de conversion de longueur d'onde de luminescence (115), dans lequel le détecteur (120) est configuré pour convertir la lumière (315) à la seconde longueur d'onde en un signal électrique.

2. Système selon la revendication 1, comprenant en outre :
un ensemble de lentilles (305) ou un ensemble de miroirs couvrant une partie perforée de la surface de la structure de support (105), dans lequel chaque lentille (305) de l'ensemble de lentilles (305) ou chaque miroir de l'ensemble de miroirs est associé à un émetteur optique respectif (110) de l'ensemble d'émetteurs optiques (110).

3. Système selon la revendication 1 ou 2, dans lequel la fibre de conversion de longueur d'onde de luminescence (115) est enroulée plusieurs fois autour de la structure de support (105), dans lequel, éventuellement, la fibre de conversion de longueur d'onde de luminescence (115) est enroulée autour de la structure de support (105) de telle sorte qu'une partie perforée de la surface de la structure de support (105) associée à l'ensemble d'émetteurs optiques (110) ne soit pas recouverte par la fibre de conversion de longueur d'onde de luminescence (115) et qu'au moins un quart d'une partie restante de la surface de la structure de support (105) soit recouverte par la fibre de conversion de longueur d'onde de luminescence (110).

4. Système selon l'une quelconque des revendications 1 à 3, dans lequel la structure de support (105) a la forme d'une sphère, d'un sphéroïde ou d'un polyèdre.

5. Système selon l'une quelconque des revendications 1 à 3, dans lequel la structure de support (105) a la forme d'au moins un quart de sphère, au moins un quart d'ellipsoïde, ou au moins un quart de polyèdre.

6. Système selon l'une quelconque des revendications 1 à 5, dans lequel le détecteur (120) est couplé à chaque extrémité de la fibre de conversion de longueur d'onde de luminescence (115).

7. Système selon l'une quelconque des revendications 1 à 6, dans lequel la fibre de conversion de longueur d'onde de luminescence (115) comprend une seule fibre optique.

8. Système selon l'une quelconque des revendications 1 à 6, dans lequel la fibre de conversion de longueur d'onde de luminescence (115) comprend plus d'une fibre optique.

9. Système selon l'une quelconque des revendications 1 à 8, dans lequel chaque émetteur optique (110-a) est configuré pour émettre de la lumière (315) à la première longueur d'onde.

10. Système selon l'une quelconque des revendications 1 à 9, dans lequel la première longueur d'onde a une valeur en dehors d'un spectre visible de lumière.

11. Procédé, comprenant :
l'absorption, au niveau d'une fibre de conversion de longueur d'onde de luminescence (115) d'un récepteur optique (310), de lumière (315) à une première longueur d'onde, dans lequel la fibre de conversion de longueur d'onde de luminescence (115) est disposée sur une surface d'une structure de support (105) de telle sorte que la fibre de conversion de longueur d'onde de luminescence (115) soit enroulée au moins partiellement autour de la structure de support (105) et située entre au moins deux paires d'un ensemble d'émetteurs optiques (110), dans lequel l'ensemble d'émetteurs optiques (110) perforent la surface de la structure de support (105), et dans lequel chaque émetteur optique (110) de l'ensemble d'émetteurs optiques (110) est orienté dans une direction différente par rapport à chaque autre émetteur optique (110) de l'ensemble d'émetteurs optiques (110) ;
l'émission de lumière (315) à l'intérieur d'un canal de la fibre de conversion de longueur d'onde de luminescence (115) à une seconde longueur d'onde sur la base au moins en partie de l'absorption de la lumière (315) à la première longueur d'onde ; et
la conversion, à l'aide d'un détecteur du récepteur optique (310), de la lumière (315) à la seconde longueur d'onde en un signal électrique, dans lequel le détecteur est couplé à au moins une extrémité de la fibre de conversion de longueur d'onde de luminescence (115).

12. Procédé selon la revendication 11, dans lequel
chaque émetteur optique (110) de l'ensemble d'émetteurs optiques (110) est associé à une lentille respective (305) d'un ensemble de lentilles (305) ou à un miroir respectif d'un ensemble de miroirs, et
l'ensemble de lentilles (305) ou l'ensemble de miroirs couvre une partie perforée de la surface de la structure de support (105).

13. Procédé selon l'une quelconque des revendications 11 ou 12, dans lequel la fibre de conversion de longueur d'onde de luminescence (115) est enroulée plusieurs fois autour de la structure de support (105).

14. Procédé selon la revendication 13, dans lequel la fibre de conversion de longueur d'onde de luminescence (115) est enroulée autour de la structure de support (105) de telle sorte qu'une partie perforée de la surface de la structure de support (105) associée à l'ensemble d'émetteurs optiques (110) ne soit pas recouverte par la fibre de conversion de longueur d'onde de luminescence (115) et qu'au moins un quart d'une partie restante de la surface de la structure de support (105) soit recouverte par la fibre de conversion de longueur d'onde de luminescence (115).

15. Procédé selon l'une quelconque des revendications 11 à 14, dans lequel le détecteur est couplé à chaque extrémité de la fibre de conversion de longueur d'onde de luminescence (115).
